# EUROPÄISCHE PATENTSCHRIFT

(11) **EP 1 485 765 B1**
(45) Veröffentlichungstag und Bekanntmachung des Hinweises auf die Patenterteilung: **08.01.2014**
(21) Anmeldenummer: 03720331.2
(22) Anmeldetag: 13.03.2003
(51) Int. Cl.: G05B 19/042, G05B 19/048, G05B 19/05

(54) **SENSOR-MASCHINEN-INTERFACE UND VERFAHREN ZU DESSEN BETRIEB**
SENSOR-MACHINE INTERFACE AND METHOD FOR OPERATION THEREOF
INTERFACE DETECTEUR-MACHINE ET SON MODE DE FONCTIONNEMENT

(30) Priorität: 18.03.2002 DE 10211941
(43) Veröffentlichungstag der Anmeldung: 15.12.2004
(73) Patentinhaber: SICK AG, 79183 Waldkirch (DE)
(72) Erfinder: MÄNNER, Bernd, 79353 Bahlingen (DE)
(74) Vertreter: Manitz, Finsterwald & Partner GbR
(86) Internationale Anmeldenummer: PCT/EP2003/002645
(87) Internationale Veröffentlichungsnummer: WO 2003/079122

(56) Entgegenhaltungen:
- WO-A1-00/42477
- DE-A- 19 805 606
- DE-A- 19 933 812
- DE-A1- 3 340 946
- "Einfuehrung" , AUTOMATISIEREN MIT SPS THEORIE UND PRAXIS, XX, XX, PAGE(S) 1-27,530-533,721-753 XP002251715 Seite 1-27 Seite 748 -Seite 750
- G WELLENREUTHER, D ZASTROW: "Automatisieren mit SPS Theorie und Praxis" 2001 , VIEWEG , BRAUNSCHWEIG/WIESBADEN XP002273654 Seite 310 -Seite 334

## Beschreibung

Die Erfindung betrifft ein Sensor-Maschinen-Interface zur Ankopplung mindestens eines Sensors an mindestens eine Maschine.

Gemäß Stand der Technik werden Sensoren, wie z.B. Lichtgitter, Lichtschranken oder Scanner direkt mit einer Maschine, beispielsweise einer Presse, einem Roboter, einem Motor, etc., bzw. mit dem der Maschine zugeordneten Steuerungsrechner verbunden.
Eine derartige Verbindung ist von Nachteil, wenn bezüglich der Gesamtanordnung Sensor/Maschine Sicherheitsstandards eingehalten werden müssen, um beispielsweise Verletzungen von Bedienpersonen zu vermeiden. In diesem Fall kommt nämlich dem der Maschine zugeordneten Steuerungsrechner die sicherheitsrelevante Aufgabe zu, vom Sensor kommende Signale auszuwerten und in Steuerungs- bzw. Abschaltsignale für die Maschine umzusetzen. Dementsprechend muss der gesamte, in der Regel relativ aufwendige Steuerungsrechner die jeweils erforderlichen Sicherheitsstandards erfüllen, obwohl die von ihm zu erledigenden Aufgaben nur zu einem geringen Teil sicherheitsrelevant sind. Dementsprechend muss also der komplette Steuerungsrechner, obwohl er zu einem Großteil nicht sicherheitsrelevante Aufgaben der Maschinensteuerung übernimmt, so ausgeführt werden, dass er ebenso wie die auf dem Steuerungsrechner laufende Software die jeweils gültigen Sicherheitsstandards erfüllt, was mit einem nachteilig hohen wirtschaftlichen Aufwand verbunden ist. Insbesondere muss das Erfüllen der Sicherheitsstandards für jede Maschine bzw. jeden Steuerungsrechner einschließlich der zugehörigen Software von einer entsprechend zuständigen Zulassungsstelle überprüft werden, was den zu betreibenden Aufwand zusätzlich vergrößert.

Dementsprechend ist es wünschenswert, eine Sensor/Maschinenankopplung der genannten Art so auszuführen, dass sie sich kostengünstig realisieren lässt und insbesondere gleichzeitig den jeweils gültigen Sicherheitsstandard erfüllt.

Ein diese Anforderung erfüllendes Sensor-Maschinen-Interface ist aus dem Dokument DE 33 40 946 A1 bekannt. Dieses Dokument offenbart ein Sensor-Maschinen-Interface zur Ankopplung mindestens eines Sensors an mindestens eine Maschine mit zumindest einem Sensoreingang zum Empfang von Sensorzustandssignalen, zumindest einem Maschinenausgang zur Aussendung von Maschinensteuersignalen, einem Programmspeicher sowie einer Steuereinheit zur programmgesteuerten Beaufschlagung des Maschinenausgangs in Abhängigkeit von den über den Sensoreingang empfangenen Signalen.

Ein Sensor-Maschinen-Interface gemäß dem Oberbegriff des Anspruchs 1 ist aus WO 00/42477 A1 bekannt.

Es wird also der sicherheitsrelevante Teil des zu einer Maschine gehörigen Steuerungsrechners aus dem Steuerungsrechner herausgelöst und in ein Sensor-Maschinen-Interface verlegt. Hierbei handelt es sich um eine separate, vergleichsweise kleine Baueinheit, die zwischen Sensor und Maschine bzw. zwischen Sensor und Steuerungsrechner der Maschine geschaltet wird. Diese Baueinheit übernimmt die Aufgabe, die vom Sensor kommenden Signale in Steuerungs- bzw. Abschaltsignale für die Maschine umzusetzen. Dies bewirkt auf vorteilhafte Weise, dass lediglich das erfindungsgemäß vorgesehene, im Vergleich zum Maschinen-Steuerungsrechner wesentlich weniger aufwendige Sensor-Maschinen-Interface die jeweils gültigen Sicherheitsstandards erfüllen muss, der Steuerungsrechner jedoch in herkömmlicher Weise somit kostengünstig ausgeführt werden kann.

Die Aufgabe der vorliegenden Erfindung besteht darin, ein Interface der genannten Art dahingehend zu verbessern, dass die Gesamtanordnung von Maschine, Interface und Sensor mit erhöhter Sicherheit betrieben werden kann und einfach zu bedienen ist.

Diese Aufgabe wird erfindungsgemäß durch ein Sensor-Maschinen-Interface gemäß Anspruch 1 und durch ein Verfahren gemäß Anspruch 12 zum Betrieb eines solchen Sensor-Maschinen-Interface gelöst.

Das erfindungsgemäße Sensor-Maschinen-Interface kann so ausgebildet werden, dass es sich für einen Anschluss an eine Vielzahl von unterschiedlichen Maschinen sowie eine Vielzahl von unterschiedlichen Sensoren eignet, so dass für entsprechend viele unterschiedliche Kombinationen von Sensoren und Maschinen jeweils immer nur ein und dasselbe Sensor-Maschinen-Interface mit zugehöriger Software hinsichtlich der Erfüllung der gültigen Sicherheitsstandards zugelassen werden muss. Dies bedingt einen Kostenvorteil.

Das erfindungsgemäße Sensor-Maschinen-Interface, welches bevorzugt in einem von Sensor und Maschine separaten Gehäuse untergebracht ist, kann vorteilhafterweise zusätzlich zumindest einen Maschineneingang zum Empfang von Maschinenzustandssignalen aufweisen, wobei der Maschinenausgang in Abhängigkeit von dem über den Sensor- und/ oder den Maschineneingang empfangenen Signalen beaufschlagbar ist. Durch den genannten Maschineneingang wird es dementsprechend möglich, eine Maschine nicht nur in Abhängigkeit von Sensorsignalen, sondern gleichzeitig auch in Abhängigkeit von Maschinenzuständen zu steuern. Dies ist bei solchen Anwendungsfällen sinnvoll, bei denen die Maschine beispielsweise nicht immer abgeschaltet werden soll, wenn ein Objekt in den Überwachungsbereich des zugeordneten Sensors eindringt. Beispielsweise ist es nicht nötig, eine sich öffnende Presse abzuschalten, wenn sich eine Bedienperson im Überwachungsbereich befindet. In diesem Fall sendet das erfindungsgemäße Sensor-Maschinen-Interface kein Abschaltsignal aus, wenn über den Maschineneingang der Zustand "Öffnen" gemeldet wird, und zwar unabhängig von den über den Sensoreingang gelieferten Signalen des Sensors.
Wenn sich die Presse jedoch schließt und dementsprechend über den Maschineneingang der Zustand "Schließen" gemeldet wird, und sich gleichzeitig ein Objekt im Überwachungsbereich befindet, wird über den Maschinenausgang ein Abschaltsignal ausgesandt, um so zu verhindern, dass sich eine Bedienperson verletzt.
In verallgemeinerter Form wird das erfindungsgemäße Interface also bevorzugt derart betrieben, dass beim Empfang von bestimmten Sensor- oder Maschinenzustandssignalen oder bestimmten Kombinationen von Sensor- oder Maschinenzustandssignalen kein Maschinenabschaltsignal ausgesandt wird, und beim Empfang von anderen Sensor- oder Maschinenzustandssignalen oder anderen Kombinationen von Sensor- oder Maschinenzustandssignalen über den Maschinenausgang ein Maschinenabschaltsignal ausgesandt wird.

Weiterhin ist es von Vorteil, wenn der Maschinenausgang zur Aussendung von Maschinenabschaltsignalen und/oder zur Aussendung von Maschinenbetätigungs-, insbesondere Maschinentaktsignalen, ausgelegt ist. Durch diese Maßnahme kann beispielsweise eine Presse immer dann mit einem Taktsignal beaufschlagt und auf diese Weise aktiviert werden, wenn eine Bedienperson ihre Hände aus dem Überwachungsbereich des zugeordneten Sensors herausnimmt.

Hard- und Software des erfindungsgemäßen Sensor-Maschinen-Interface erfüllen bevorzugt übliche Sicherheitsstandards, insbesondere die Normen IEC61508 und/oder EN61496. Um diese Sicherheitsstandards zu gewährleisten, kann zumindest die im Interface vorhandene Steuereinheit in redundanter Weise doppelt vorhanden sein.

Im Programmspeicher können unterschiedliche Programme oder Programmmodule abgelegt werden, so dass die programmgesteuerte Beaufschlagung des Maschinenausgangs in unterschiedlicher Weise durchführbar ist. Durch diese Maßnahme ist das erfindungsgemäße Sensor-Maschinen-Interface an unterschiedliche Betriebsanforderungen, unterschiedliche Sensoren und unterschiedliche Maschinen anpassbar. Die unterschiedlichen Programme oder Programmmodule können durch ein externes Programmiergerät, insbesondere einen Rechner oder Laptop, über eine Programmierschnittstelle in den Programmspeicher geladen werden. Dabei ist es insbesondere möglich, die im Programmspeicher abgelegten Programme über eine insbesondere auf dem Rechner oder Laptop laufende Bedienoberfläche aus vorgegebenen Programmmodulen zusammenzusetzen. Das Zusammensetzen der Programme aus einzelnen Programmodulen hat den Vorteil, dass lediglich die einzelnen Programmmodule hinsichtlich der Erfüllung von Sicherheitsanforderungen überprüft bzw. zugelassen werden müssen, wodurch dann sichergestellt ist, dass auch die aus diesen Programmmodulen zusammengesetzten Programme die entsprechenden Sicherheitsstandards erfüllen. Eine separate Zulassung der fertigen Programme ist dann nicht mehr nötig, so dass durch die Zulassung einer begrenzten Anzahl von Programmmodulen eine sehr viel höhere Anzahl von aus diesen Modulen zusammengesetzten Programmen zur Verfügung stehen, ohne dass diese Programme separat zugelassen werden müssten.

Die Auswahl der verschiedenen, im erfindungsgemäßen Sensor-Maschinen-Interface zur Verfügung stehenden, beispielsweise aus Programmmodulen zusammengesetzten Programme in Abhängigkeit vom jeweiligen Anwendungsfall wird mittels eines Programmwahlschalters vorgenommen.

Besonders vorteilhaft ist es, wenn zusätzlich ein Sensorausgang vorgesehen ist, über den ein angeschlossener Sensor konfigurier- und/oder überwachbar ist. Dieser Sensorausgang kann dann beispielsweise dazu benutzt werden, mittels der im Programmspeicher abgelegten Programme automatisch zu überwachen, ob das Sensor-Maschinen-Interface korrekt funktioniert, und/oder ob der zum ausgewählten Programm passende Sensor an den Sensorein- und/oder -ausgang angeschlossen ist, und/oder ob der angeschlossene Sensor korrekt funktioniert. Zudem kann mittels der im Programmspeicher abgelegten Programme auch automatisch überwacht werden, ob die zum ausgewählten Programm passende Maschine an den Maschinenein- und/oder -ausgang angeschlossen ist.

Im Interface ist ein Sensorkonfigurationsspeicher vorgesehen, in dem Konfigurationsdaten für einen an den Sensorausgang angeschlossenen Sensor ablegbar sind. So kann ein angeschlossener Sensor über einen Sensorausgang konfiguriert werden. Die Konfigurationsdaten können beispielsweise beim Anschluss eines Sensors vom Sensor in den Sensorkonfigurationsspeicher geladen werden, wobei es in diesem Fall erforderlich ist, den Sensor zu konfigurieren, bevor er an das Interface angeschlossen wird. Ebenso ist es jedoch auch möglich, die Konfigurationsdaten vom Sensorkonfigurationsspeicher in den Sensor zu laden, wenn er an das erfindungsgemäße Interface angeschlossen wird. In diesem Fall ist es nicht nötig, den Sensor vorab zu konfigurieren, allerdings muss der Sensorkonfigurationsspeicher vor dem Anschluss des Sensors entsprechend belegt worden sein. Diese Belegung des Sensorkonfigurationsspeichers kann beispielsweise mittels eines Konhgurationsgerätes bewerkstelligt werden, das dazu geeignet ist, Konfigurationsdaten in den Sensorkonfigurationsspeicher zu laden.

Bevorzugt ist es, wenn im Sensorkonfigurationsspeicher unterschiedliche Sets von Konfigurationsdaten ablegbar sind, die auf unterschiedliche Sensortypen und/oder unterschiedliche Programme bezogen sind. So ist es möglich, mit dem erfindungsgemäßen Interface Sensoren unterschiedlichen Typs zu konfigurieren und auch unterschiedliche Konfigurationen in Abhängigkeit von den jeweils im erfindungsgemäßen Interface ablaufenden Programmen vorzunehmen.

Beim Anschluss eines neuen Sensors beim Einschalten des Sensor-Maschinen-Interface werden automatisch zum angeschlossenen Sensortyp passende Konfigurationsdaten vom Sensorkonfigurationsspeicher in den Sensor geladen und der Sensor wird somit konfiguriert. Hier kann beim Anschluss eines Sensors an das erfindungsgemäße Interface beispielsweise über den Sensoreingang der Sensortyp mitgeteilt werden, woraufhin die erfindungsgemäß vorgesehene Steuereinheit aus dem Sensorkonfigurationsspeicher das passende Set von Konfigurationsdaten heraussucht und über den Sensorausgang dem Sensor zur Verfügung stellt.

Das erfindungsgemäße Interface ist mit einem Sensor-Betriebsartenwahlschalter versehen, über den unterschiedliche Betriebsarten des Sensors einstellbar sind. Die zur Einstellung der Sensor-Betriebsart an den Sensor zu übermittelnden Daten können dabei, insbesondere an den automatisch erkannten Typ des jeweils angeschlossenen Sensors angepasst sein.
Durch den genannten Sensor-Betriebsartenwahlschalter ist es beispielsweise möglich, ein Lichtgitter in einem ersten Modus zu betreiben, in dem die Unterbrechung jedes Lichtstrahls des Lichtgitters zu einem Gegenstandsfeststellungssignal führt. Zudem kann das Lichtgitter in einer anderen Stellung des Sensor-Betriebsartenwahlschalters in einem zweiten Modus betrieben werden, indem die Unterbrechung bestimmter Lichtstrahlen des Lichtgitters nicht zur Auslösung eines Gegenstandsfeststellungssignals führt (Blanking). Dieser zweite Modus wird beispielsweise benötigt, wenn bestimmte Bereiche des Lichtgitters ausgeblendet werden müssen, um die Zufuhr von Material zu einer Maschine zu ermöglichen. Es können mittels des Sensor-Betriebsartenwahlschalters auch noch weitere Modes des Sensors eingestellt werden, beispielsweise können bei einem Lichtgitter mehrere, voneinander verschiedene Ausblendbereiche definiert werden, die sich dann über den Sensor-Betriebsartenwahlschalter aktivieren lassen.

Der Sensor-Betriebsartenwahlschalter kann derart funktionieren, dass bei einer definierten Schalterstellung bei verschiedenen Arten von Sensoren jeweils einander entsprechende Funktionen bzw. Betriebsarten aktiviert werden, obwohl diese unterschiedlichen Sensoren hierfür unterschiedliche Steuersignale benötigen. Diese verschiedenen Steuersignale müssen in diesem Fall im erfindungsgemäßen Interface der genannten Schalterstellung zugeordnet werden. Welche Steuersignale dann an den Sensor gesandt werden, kann dadurch entschieden werden, dass das erfindungsgemäße Interface selbsttätig erkennt, welche Art von Sensor angeschlossen ist.

Das erfindungsgemäße Sensor-Maschinen-Interface kann mit einer Mehrzahl von Sensoreingängen, Sensorausgängen, Maschinenausgängen und/oder Maschineneingängen versehen sein, um so den gleichzeitigen Betrieb von mehreren Sensoren und/oder Maschinen in Verbindung mit einem einzelnen Sensor-Maschinen-Interface zu ermöglichen.

Weitere bevorzugte Ausführungsformen des erfindungsgemäßen Interface sowie von Verfahren zu dessen Betrieb sind in den Unteransprüchen genannt.

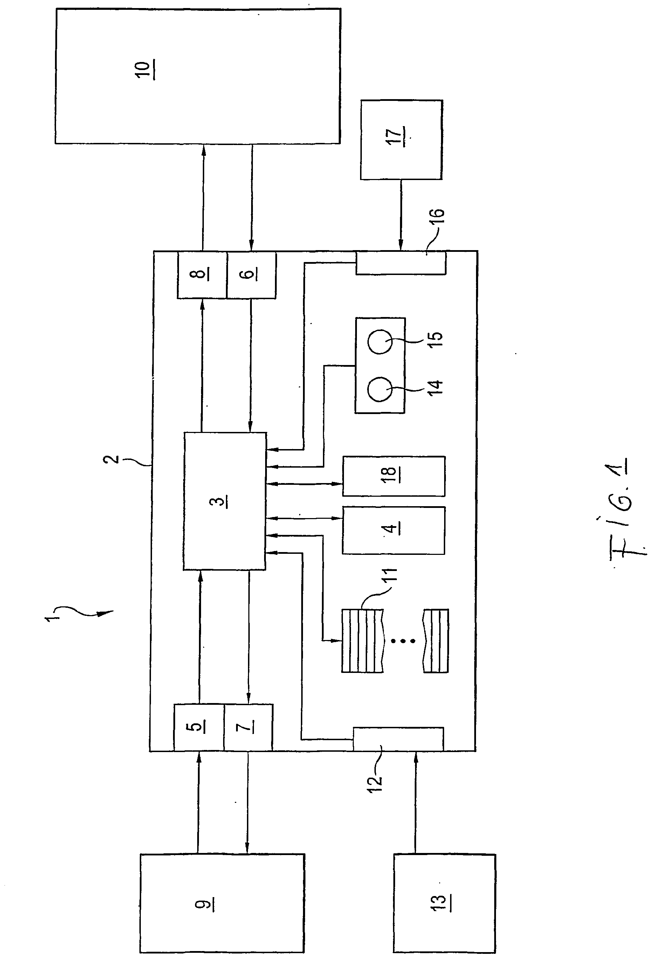

Die Erfindung wird nachfolgend anhand eines Ausführungsbeispiels unter Bezugnahme auf die einzige Zeichnung beschrieben. Diese Zeichnung zeigt ein Blockschaltbild eines Sensor-Maschinen-Interface mit daran angeschlossenen Geräten bzw. Maschinen.

Das erfindungsgemäße Sensor-Maschinen-Interface 1 ist in einem Gehäuse 2 untergebracht. Es weist eine Steuerungseinheit 3 auf, die mit einem Programmspeicher 4 kommuniziert.

Weiterhin ist die Steuereinheit 3 dazu in der Lage, Signale zu empfangen, die von einem Sensoreingang 5 sowie von einem Maschineneingang 6 zur Verfügung gestellt werden. Weiterhin kann die Steuereinheit 3 einen Sensorausgang 7 sowie einen Maschinenausgang 8 beaufschlagen.

Über den Sensoreingang 5 und den Sensorausgang 7 ist das Sensor-Maschinen-Interface 1 mit einem Sensor 9, beispielsweise einem Lichtgitter verbunden. In entsprechender Weise ist das Sensor-Maschinen-Interface 1 über den Maschineneingang 6 und den Maschinenausgang 8 mit einer Bearbeitungsmaschine 10, beispielsweise einer Presse, verbunden.

Im Gehäuse 2 ist weiterhin ein Programmmodulspeicher 11 vorhanden, in welchem eine Mehrzahl von eine Programmbibliothek bildenden Programmmodulen abgelegt ist. Der Programmmodulspeicher 11 kommuniziert ebenso wie der Programmspeicher 4 mit der Steuereinheit 3.

Das Sensor-Maschinen-Interface 1 ist weiterhin mit einer Programmierschnittstelle 12 versehen, an die ein Laptop 13 anschließbar ist. Über diese Programmierschnittstelle 12 kann der Laptop 13 mit der Steuereinheit 3 kommunizieren.

Ferner ist am Sensor-Maschinen-Interface 1 ein Programmwahlschalter 14 angebracht, welcher die Steuereinheit 3 beaufschlagt und über den unterschiedliche, im Programmspeicher 4 abgelegte Programme aktiviert werden können. Zudem ist ein Sensorbetriebsartenwahlschalter 15 vorgesehen, welcher ebenfalls die Steuereinheit 3 beaufschlagt, wodurch über den Sensorausgang 7 am Sensor 9 verschiedene Betriebsarten eingestellt werden können. Bei einer alternativen Ausführungsform können die Funktionen von Programmwahlschalter 14 und Sensorbetriebsartenwahlschalter 15 auch in einem einzigen Wahlschalter zusammengefasst werden.

Eine Konfigurationsschnittstelle 16 des Sensor-Maschinen-Interface 1 ist dazu geeignet, mit einem externen Konfigurationsgerät 17 verbunden zu werden, über das Sensor-Konfigurationsdaten vom Konfigurationsgerät 17 über die Konfigurationsschnittstelle 16 und die Steuereinheit 3 zu einem Sensorkonfigurationsspeicher 18 gesandt werden können.

Die Inbetriebnahme einer Anordnung gemäß dem beschriebenen Blockschaltbild kann beispielsweise wie folgt vor sich gehen: Ein Laptop 13 wird an die Programmierschnittstelle 12 angeschlossen. Über die auf dem Laptop 13 laufende Bedienoberfläche werden dann verschiedene Programmmodule aus dem Programmmodulspeicher 11 geladen und zu einem oder mehreren Programmen zusammengefügt, welche an den jeweiligen Anwendungsfall angepasst sind und die dann im Programmspeicher 4 abgelegt werden. Über den Programmwahlschalter 14 wird dann das jeweils gewünschte Programm aktiviert.

Anschließend wird ein unkonfigurierter Sensor 9 an den Sensoreingang 5 und den Sensorausgang 7 angeschlossen. Zum Zweck der Konfiguration dieses Sensors 9 wird ferner das Konfigurationsgerät 17 an der Konfigurationsschnittstelle 16 angeschlossen. Die vom Sensor 9 benötigten Konfigurationsdaten werden dann vom Konfigurationsgerät 17 über die Konfigurationsschnittstelle 16 und die Steuereinheit 3 einerseits in den Sensorkonfigurationsspeicher 18 und andererseits über den Sensorausgang 7 in den Sensor 9 geladen. Wenn zu einem späteren Zeitpunkt der Sensor 9 defekt ist und durch einen anderen Sensor ersetzt wird, können die im Sensorkonfigurationsspeicher 18 gespeicherten Konfigurationsdaten automatisch in den neuen Sensor geladen werden, so dass dieser konfiguriert wird, ohne dass das Konfigurationsgerät 17 nochmals angeschlossen werden muss.

Die jeweils gewünschte Betriebsart des Sensors kann über den Sensorbetriebsartenwahlschalter 15 vorgenommen werden.

Anschließend kann die Einheit aus Sensor-Maschinen-Interface 1, Sensor 9 und Maschine 10 in Betrieb gehen. In Abhängigkeit von Sensorzustandssignalen, die über den Sensoreingang 5 geliefert werden und Maschinenzustandssignalen, die über den Maschineneingang 6 geliefert werden, kann das jeweils in der Steuereinheit 3 laufende Programm die Maschine 10 über den Maschinenausgang 8 in der gewünschten Weise beaufschlagen.

### Bezugszeichenliste

- 1: Sensor-Maschinen-Interface
- 2: Gehäuse
- 3: Steuereinheit
- 4: Programmspeicher
- 5: Sensoreingang
- 6: Maschineneingang
- 7: Sensorausgang
- 8: Maschinenausgang
- 9: Sensor
- 10: Maschine
- 11: Programmmodulspeicher
- 12: Programmierschnittstelle
- 13: Laptop
- 14: Programmwahlschalter
- 15: Sensor-Betriebsartenwahlschalter
- 16: Konfigurationsschnittstelle
- 17: Konfigurationsgerät
- 18: Sensorkonfigurationsspeicher

## Patentansprüche

1. Sensor-Maschinen-Interface (1) zur Ankopplung mindestens eines Sensors (9) an mindestens eine Maschine (10) mit zumindest einem Sensoreingang (5) zum Empfang von Sensorzustandssignalen, zumindest einem Maschinenausgang (8) zur Aussendung von Maschinensteuersignalen, einem Programmspeicher (4), einer Steuereinheit (3) zur programmgesteuerten Beaufschlagung des Maschinenausgangs (8) in Abhängigkeit von den über den Sensoreingang (5) empfangenen Signalen, sowie einem Sensorkonfigurationsspeicher (18), wobei ein Sensor-Betriebsartenwahlschalter (15) vorgesehen ist, über den unterschiedliche Betriebsarten des Sensors (9) als Funktionen des Betriebsartenwahlschalters (15) einstellbar sind, **dadurch gekennzeichnet,**
**dass** ein Programmwahlschalter (14) vorgesehen ist, über den unterschiedliche Programme als Funktionen des Programmwahlschalters (14) aktivierbar sind,
**dass** die Funktionen des Programmwahlschalters (14) und des Sensor-Betriebsartenwahlschalters (15) in einem einzigen Schalter zusammengefasst sind,
**dass** im Sensorkonfigurationsspeicher (18) unterschiedliche Sets von Konfigurationsdaten ablegbar sind, die auf unterschiedliche Sensortypen und unterschiedliche Programme bezogen sind, wobei beim Anschluss eines neuen Sensors (9) beim Einschalten des Sensor-Maschinen-Interface (1) automatisch zum angeschlossenen Sensortyp und in Abhängigkeit von den ablaufenden Programmen passende Konfigurationsdaten vom Sensorkonfigurationsspeicher (18) in den Sensor (9) geladen werden und der neue Sensor (9) somit konfiguriert wird.

2. Sensor-Maschinen-Interface nach Anspruch 1,
**dadurch gekennzeichnet,**
**dass** das Sensor-Maschinen-Interface (1) in einem von Sensor (9) und Maschine (10) separaten Gehäuse (2) untergebracht ist.

3. Sensor-Maschinen-Interface nach Anspruch 1 oder 2,
**dadurch gekennzeichnet,**
**dass** zumindest ein Maschineneingang (6) zum Empfang von Maschinenzustandssignalen (8) vorgesehen ist, wobei der Maschinenausgang in Abhängigkeit von den über den Sensor- und/oder den Maschineneingang (5, 6) empfangenen Signalen beaufschlagbar ist.

4. Sensor-Maschinen-Interface nach einem der vorhergehenden Ansprüche,
**dadurch gekennzeichnet,**
**dass** der Maschinenausgang (8) zur Aussendung von Maschinenabschaltsignalen und/oder zur Aussendung von Maschinenbetätigungs-, insbesondere Maschinentaktsignalen, ausgelegt ist.

5. Sensor-Maschinen-Interface nach einem der vorhergehenden Ansprüche,
**dadurch gekennzeichnet,**
**dass** zumindest die Steuereinheit (3) in redundanter Weise doppelt vorhanden ist.

6. Sensor-Maschinen-Interface nach einem der vorhergehenden Ansprüche,
**dadurch gekennzeichnet,**
**dass** im Programmspeicher (4) unterschiedliche Programme oder Programmmodulen ablegbar sind, so dass die programmgesteuerte Beaufschlagung des Maschinenausgangs (8) in unterschiedlicher Weise durchführbar ist.

7. Sensor-Maschinen-Interface nach Anspruch 6,
dadurch **gekennzeichet**,
dass die unterschiedlichen Programme oder Programmmodule durch ein externes Programmiergerät (13), insbesondere einen Rechner oder Laptop, über eine Programmierschnittstelle (12) in den Programmspeicher (4) ladbar sind.

8. Sensor-Maschinen-Interface nach Anspruch 6 oder 7,
**dadurch gekennzeichnet,**
**dass** eine Mehrzahl von eine Programmbibliothek bildenden Programmmodulen zu Programmen zusammenfügbar sind.

9. Sensor-Maschinen-Interface nach einem der vorhergehenden Ansprüche,
dadurch **gekenntzeichnet**,
dass ein Sensorausgang (7) vorgesehen ist, über den ein angeschlossener Sensor (9) konfgurierbar ist.

10. Sensor-Maschinen-Interface nach einem der vorhergehenden Ansprüche,
**dadurch gekennzeichnet,**
**dass** Konfigurationsdaten vom Sensor (9) in den Sensorkonfigurationsspeicher (18) ladbar sind.

11. Sensor-Maschinen-Interface nach einem der vorhergehenden Ansprüche,
**dadurch gekennzeichnet,**
**dass** eine Mehrzahl von Sensoreingängen (5), Sensorausgängen (7), Maschinenausgängen (8) und/oder Maschineneingängen (6) vorgesehen sind.

12. Verfahren zum Betrieb eines Sensor-Maschinen-Interface (1), wobei das Sensor-Maschinen-Interface (1) gemäß einem der vorhergehenden Ansprüche ausgebildet ist,
**dadurch gekennzeichnet,**
- **dass** mittels eines Programmwahlschalters (14) unterschiedliche Programme als Funktionen des Programmwahlschalters (14) aktiviert werden, wobei die Funktionen des Programmwahlschalters (14) und des Sensor-Betriebsartenwahlschalters (15) in einem einzigen Schalter zusammengefasst sind,
- **dass** im Sensorkonfigurationsspeicher (18) unterschiedliche Sets von Konfigurationsdaten abgelegt werden, die auf unterschiedliche Sensortypen und unterschiedliche Programme bezogen sind,
- **dass** beim Anschluss eines neuen Sensors (9) beim Einschalten des Sensor-Maschinen-Interface (1) automatisch zum angeschlossenen Sensortyp und in Abhängigkeit von den ablaufenden Programmen passende Konfigurationsdaten vom Sensorkonfigurationsspeicher (18) in den Sensor (9) geladen werden und der neue Sensor (9) somit konfiguriert wird, und
- **dass** die Sensorzustandssignale das Vorhandensein von Objekten in zumindest einem vorgegebenen Überwachungsbereich anzeigen.

13. Verfahren nach Anspruch 12,
**dadurch gekennzeichnet,**
**dass** beim Empfang von Sensorzustandssignalen, die ein Vorhandensein eines Objekts im Überwachungsbereich anzeigen, über den Maschinenausgang (8) ein Maschinenabschaltsignal ausgesandt wird.

14. Verfahren nach Anspruch 12,
**dadurch gekennzeichnet,**
**dass** beim Empfang von bestimmten Sensor- oder Maschinenzustandssignalen oder bestimmten Kombinationen von Sensor- oder Maschinenzustandssignalen kein Maschinenabschaltsignal ausgesandt wird, und
beim Empfang von anderen Sensor- oder Maschinenzustandssignalen oder anderen Kombinationen von Sensor- oder Maschinenzustandssignalen über den Maschinenausgang ein Maschinenabschaltsignal ausgesandt wird.

15. Verfahren nach einem der Ansprüche 12 bis 14,
**dadurch gekennzeichnet,**
**dass** über den Maschinenausgang (8) ein in Abhängigkeit von Maschinen- und/oder Sensorzustandssignalen generiertes Maschinentaktsignal zur Auslösung bestimmter Maschinenfunktionen ausgesandt wird.

16. Verfahren nach einem der Ansprüche 12 bis 15,
**dadurch gekennzeichnet,**
**dass** die im Programmspeicher (4) abgelegten Programme über eine insbesondere auf einem Rechner oder Laptop (13) laufende Bedienoberfläche aus vorgegebenen Programmmodulen zusammengesetzt werden.

17. Verfahren nach einem der Ansprüche 12 bis 16,
**dadurch gekennzeichnet,**
**dass** mittels der im Programmspeicher (4) abgelegten Programme automatisch überwacht wird,
ob das Sensor-Maschinen-Interface (1) korrekt funktioniert, und/oder
ob der zum ausgewählten Programm passende Sensor (9) an den Sensorein- und/oder -ausgang (5, 7) angeschlossen ist, und/oder ob die zum ausgewählten Programm passende Maschine (10) an den Maschinenein- und/oder -ausgang (6, 8) angeschlossen ist.

18. Verfahren nach einem der Ansprüche 12 bis 17,
**dadurch gekennzeichnet,**
**dass** ein angeschlossener Sensor (9) über einen Sensorausgang (7) konfiguriert wird.

19. Verfahren nach einem der Ansprüche 12 bis 18,
**dadurch gekennzeichnet,**
**dass** Konfigurationsdaten vom Sensor (9) in den Sensorkonfigurationsspeicher (18) oder umgekehrt geladen werden.

20. Verfahren nach einem der Ansprüche 12 bis 19,
**dadurch gekennzeichnet,**
**dass** Konfigurationsdaten von einem Konfigurationsgerät (17) in den Sensorkonfigurationsspeicher (18) geladen werden.

21. Verfahren nach einem der Ansprüche 12 bis 20,
**dadurch gekennzeichnet,**
**dass** die zur Einstellung der Sensor-Betriebsart an den Sensor (9) zu übermittelnden Daten an den jeweils angeschlossenen Sensortyp angepasst sind.

## Claims

1. A sensor/ machine interface (1) for the coupling of at least one sensor (9) to at least one machine (10) having at least one sensor input (5) for the reception of sensor state signals, at least one machine output (8) for the transmission of machine control signals, a program memory (4), a control unit (3) for the program-controlled acting on the machine output (8) in dependence on the signals received via the sensor input (5), as well as a sensor configuration memory (18),
wherein a sensor operating mode selection switch (15) is provided via which different operating modes of the sensor (9) can be set as functions of the sensor operating mode selection switch (15), **characterized in that**
a program selection switch (14) is provided via which different programs can be actuated as functions of the program selection switch (14);
**in that** the functions of the program selection switch (14) and of the sensor operating mode selection switch (15) are combined in one single switch;
**in that** different sets of configuration data can be stored in the sensor configuration memory (18) which relate to different sensor types and/or to different programs;
wherein, on the connection of a new sensor (9) on the switching on of the sensor/ machine interface (1), configuration data which match the connected sensor type and are dependent on the running programs are automatically loaded into the sensor (9) from the sensor configuration memory (18) and the new sensor (9) is thus configured.

2. A sensor/machine interface in accordance with claim 1,
**characterized in that**
the sensor/machine interface (1) is accommodated in a housing (2) separate from the sensor (9) and from the machine (10).

3. A sensor/machine interface in accordance with claim 1 or claim 2,
**characterized in that**
at least one machine input (6) is provided for the reception of machine state signals (8), with the machine output being able to be acted on in dependence on signals received via the sensor input and/ or via the machine input (5, 6).

4. A sensor/machine interface in accordance with any one of the preceding claims,
**characterized in that**
the machine output (8) is designed for the transmission of machine switch-off signals and/or for the transmission of machine actuation signals, in particular machine clock signals.

5. A sensor/machine interface in accordance with any one of the preceding claims,
**characterized in that**
at least the control unit (3) is present in duplicate in a redundant manner.

6. A sensor/machine interface in accordance with any one of the preceding claims,
**characterized in that**
different programs or program modules can be stored in the program memory (4) so that the program-controlled acting on the machine output (8) can be carried out in different manners.

7. A sensor/machine interface in accordance with claim 6,
**characterized in that**
the different programs or program modules can be loaded into the program memory (4) by an external programming device (13), in particular by a computer or by a laptop, via a programming interface (12).

8. A sensor/machine interface in accordance with claim 6 or claim 7,
**characterized in that**
a plurality of program modules forming a program library can be assembled to programs.

9. A sensor/machine interface in accordance with any one of the preceding claims,
**characterized in that**
a sensor output (7) is provided via which a connected sensor (9) can be configured.

10. A sensor/machine interface in accordance with any one of the preceding claims,
**characterized in that**
configuration data can be loaded from the sensor (9) into the sensor configuration memory (18).

11. A sensor/ machine interface in accordance with any one of the preceding claims,
**characterized in that**
a plurality of sensor inputs (5), sensor outputs (7), machine outputs (8) and/or machine inputs (6) are provided.

12. A method of operating a sensor/machine interface (1), wherein the sensor/machine interface (1) is configured in accordance with any one of the preceding claims,
**characterized in that**
- different programs are activated by means of a program selection switch (14) as functions of the program selection switch (14), with the functions of the program selection switch (14) and of the sensor operating mode switch (15) being combined in one single switch;
- **in that** different sets of configuration data are stored in the sensor configuration memory (18) which are related to different sensor types and/or to different programs;
- **in that**, on the connection of a new sensor (9) on the switching on of the sensor/machine interface (1), configuration data which match the connected sensor type and are dependent on the running programs are automatically loaded into the sensor (9) from the sensor configuration memory (18) and the new sensor (9) is thus configured; and
- **in that** the sensor state signals indicate the presence of objects in at least one predefined monitored zone.

13. A method in accordance with claim 12,
**characterized in that**
on the reception of sensor state signals which indicate a presence of an object in the monitored zone, a machine switch-off signal is transmitted via the machine output (8).

14. A method in accordance with claim 12,
**characterized in that**
on the reception of specific sensor state signals or machine state signals or of specific combinations of sensor state signals or machine state signals, no machine switch-off signal is transmitted: and,
on the reception of other sensor state signals or other machine state signals or other combinations of sensor state signals or machine state signals, a machine switch-off signal is transmitted via the machine output.

15. A method in accordance with any one of the claims 12 to 14,
**characterized in that**
a machine clock signal generated in dependence on machine state signals and/or on sensor state signals is transmitted via the machine output (8) to trigger specific machine functions.

16. A method in accordance with any one of the claims 12 to 15,
**characterized in that**
the programs stored in the program memory (4) are assembled from predefined program modules via an operating interface in particular running on a computer or on a laptop (13).

17. A method in accordance with any one of the claims 12 to 16,
**characterized in that**
it is automatically monitored by means of the programs stored in the program memory (4)
whether the sensor/machine surface is working correctly; and/or
whether the sensor (9) matching the selected program is connected to the sensor input and/ or sensor output (5, 7); and/ or whether the machine (19) matching the selected program is connected to the machine input and/or machine output (6, 8).

18. A method in accordance with any one of the claims 12 to 17,
**characterized in that**
a connected sensor (9) is configured via a sensor output (7).

19. A method in accordance with any one of the claims 12 to 18,
**characterized in that**
configuration data are loaded from the sensor (9) into the sensor configuration memory (18) or vice versa.

20. A method in accordance with any one of the claims 12 to 19,
**characterized in that**
configuration data are loaded from a configuration device (17) into the sensor configuration memory (18).

21. A method in accordance with any one of the claims 12 to 20,
**characterized in that**
the data to be communicated to the sensor (9) for the setting of the sensor operating mode are matched to the respectively connected sensor type.

## Revendications

1. Interface détecteur/machine (1) pour coupler au moins un détecteur (9) à au moins une machine (10) avec au moins une entrée de détecteur (5) pour la réception de signaux d'état du détecteur, au moins une sortie de machine (8) pour émettre des signaux de commande de machine, une mémoire programme (4), une unité de commande (3) pour activer sous la commande d'un programme la sortie de machine (8) en fonction de signaux reçus via l'entrée de détecteur (5), ainsi qu'une mémoire de configuration de détecteur (18), dans laquelle il est prévu un commutateur de sélection de mode de fonctionnement (15) du détecteur au moyen duquel des modes de fonctionnement différents du détecteur (9) peuvent être réglés à titre de fonctions du commutateur de sélection de mode de fonctionnement (15),
**caractérisée en ce que**
il est prévu un commutateur de sélection de programme (14) au moyen duquel différents programmes peuvent être activés à titre de fonctions du commutateur de sélection de programme (14),
les fonctions du commutateur de sélection de programme (14) et du commutateur de sélection de mode de fonctionnement (15) sont regroupées dans un unique commutateur,
dans la mémoire de configuration de détecteur (18), des groupes différents de données de configuration peuvent être mémorisés, qui se réfèrent à des types de détecteur différents et à des programmes différents, de sorte que lors du raccordement d'un nouveau détecteur (9) lors de la mise en service de l'interface détecteur/machine (1) des données de configuration, adaptées automatiquement au type de détecteur raccordé et en fonction des programmes qui se déroulent, sont chargées depuis la mémoire de configuration de détecteur (18) vers le détecteur (9), et le nouveau détecteur (9) est ainsi configuré.

2. Interface détecteur/machine selon la revendication 1,
**caractérisée en ce que** l'interface détecteur/machine (1) est logée dans un boîtier (2) séparé du détecteur (9) et de la machine (10).

3. Interface détecteur/machine selon la revendication 1 ou 2, **caractérisée en ce qu'**il est prévu au moins une entrée de machine (6) pour recevoir des signaux d'état de la machine (8), et la sortie de machine est susceptible d'être activée en fonction des signaux reçus via l'entrée de détecteur et/ou l'entrée de machine (5, 6).

4. Interface détecteur/machine selon l'une des revendications précédentes,
**caractérisée en ce que** la sortie de machine (8) est conçue pour émettre des signaux de commutation de machine et/ou pour émettre des signaux d'actionnement de machine, en particulier des signaux d'horloge de machine.

5. Interface détecteur/machine selon l'une des revendications précédentes,
**caractérisée en ce que** l'unité de commande (3) au moins est prévue en double de manière redondante.

6. Interface détecteur/machine selon l'une des revendications précédentes,
**caractérisée en ce que**, dans la mémoire programme (4), différents programmes ou modules de programmes peuvent être stockés, de sorte que l'activation de la sortie de machine (8) sous la commande d'un programme est exécutable de manière différente.

7. Interface détecteur/machine selon la revendication 6,
**caractérisée en ce que** les différents programmes ou modules de programmes peuvent être chargés par un appareil de programmation externe (13), en particulier un ordinateur fixe ou un ordinateur portable, via une interface de programmation (12) dans la mémoire programme (4).

8. Interface détecteur/machine selon la revendication 6 7 ou 7, **caractérisée en ce qu'**une pluralité de modules de programmes constituant une bibliothèque de programmes sont susceptibles d'être regroupés pour donner des programmes.

9. Interface détecteur/machine selon l'une des revendications précédentes,
**caractérisée en ce qu'**il est prévu une sortie de détecteur (7), via laquelle un détecteur (9) raccordé peut être configuré.

10. Interface détecteur/machine selon l'une des revendications précédentes,
**caractérisée en ce que** des données de configuration sont susceptibles d'être chargées depuis le détecteur (9) vers la mémoire de configuration de détecteur (18).

11. Interface détecteur/machine selon l'une des revendications précédentes,
**caractérisée en ce qu'**il est prévu une pluralité d'entrées de détecteur (5), de sorties de détecteur (7), de sorties de machine (8) et/ou d'entrées de machine (6).

12. Procédé pour le fonctionnement d'une interface détecteur/machine (1), dans lequel l'interface détecteur/machine (1) et réalisée selon l'une des revendications précédentes,
**caractérisé en ce que**
- au moyen d'un commutateur de sélection de programme (14) on active différents programmes à titre de fonctions du commutateur de sélection de programme (14), dans lequel les fonctions du commutateur de sélection de programme (14) et du commutateur de sélection de mode de fonctionnement (15) du détecteur sont regroupées dans un commutateur unique,
- **en ce que** dans la mémoire de configuration de détecteur (18) on mémorise différents groupes de données de configuration qui se réfèrent à des types de détecteurs différents et à des programmes différents,
- **en ce que** lors du raccordement d'un nouveau détecteur (9), lors de la mise en service de l'interface détecteur/machine (1) des données de configuration adaptées automatiquement au type de détecteur raccordé et en fonction des programmes qui se déroulent, sont chargées depuis la mémoire de configuration de détecteur (18) vers le détecteur (9) et le nouveau détecteur (9) est ainsi configuré, et
- **en ce que** les signaux d'état du détecteur indiquent la présence d'objets dans au moins une zone de surveillance prédéterminée.

13. Procédé selon la revendication 12,
**caractérisé en ce que**
lors de la réception de signaux d'état du détecteur qui indiquent une présence d'un objet dans la zone de surveillance, on émet un signal de coupure de machine via la sortie de machine (8).

14. Procédé selon la revendication 12,
**caractérisé en ce que**
lors de la réception de certains signaux d'état du détecteur ou de la machine ou certaines combinaisons de signaux d'état du détecteur ou de la machine, on n'émet aucun signal de coupure de machine, et
lors de la réception d'autres signaux d'état du détecteur ou de la machine ou d'autres combinaisons de signaux d'état du détecteur ou de la machine, on émet un signal de coupure de machine via la sortie de machine.

15. Procédé selon l'une des revendications 12 à 14,
**caractérisé en ce que** l'on émet via la sortie de machine (8) un signal d'horloge de machine généré en fonction des signaux d'état de la machine et/ou du détecteur, pour déclencher certaines fonctions de la machine.

16. Procédé selon l'une des revendications 12 à 15,
**caractérisé en ce que** les programmes mémorisés dans la mémoire programme (4), en particulier une interface utilisateur en service sur un ordinateur fixe ou un ordinateur portable (13) sont composés à partir de modules de programmes prédéterminés.

17. Procédé selon l'une des revendications 12 à 16,
**caractérisé en ce que**
au moyen des programmes mémorisés dans la mémoire programme (4), on surveille
si l'interface détecteur/machine (1) fonctionne correctement, et/ou si le détecteur (9) adapté au programme sélectionné est branché à l'entrée et/ou à la sortie de détecteur (5, 7), et/ou si la machine (10) adaptée au programme sélectionné est branchée à l'entrée de machine et/ou à la sortie de machine (6, 8).

18. Procédé selon l'une des revendications 12 à 17,
**caractérisé en ce qu'**un détecteur raccordé (9) est configuré via une sortie de détecteur (7).

19. Procédé selon l'une des revendications 12 à 18,
**caractérisé en ce que** des données de configuration sont chargées depuis le détecteur (9) vers la mémoire de configuration de détecteur (18) ou inversement.

20. Procédé selon l'une des revendications 12 à 19,
**caractérisé en ce que** les données de configuration sont chargées par un appareil de configuration (17) vers la mémoire de configuration de détecteur (18).

21. Procédé selon l'une des revendications 12 à 20,
**caractérisé en ce que** les données à transmettre au détecteur (9) pour régler le mode de fonctionnement du détecteur sont adaptées au type de détecteur respectivement branché.
